(19) Europäisches Patentamt / European Patent Office / Office européen des brevets

(11) **EP 4 672 151 A1**

(12) **EUROPEAN PATENT APPLICATION**
published in accordance with Art. 153(4) EPC

(43) Date of publication:
**31.12.2025 Bulletin 2026/01**

(21) Application number: **24789065.0**

(22) Date of filing: **12.04.2024**

(51) International Patent Classification (IPC):
*G06T 7/73* (2017.01)     *G06T 5/70* (2024.01)
*G06T 5/40* (2006.01)     *G06V 10/44* (2022.01)
*G06V 40/10* (2022.01)

(52) Cooperative Patent Classification (CPC):
**G06T 5/40; G06T 5/70; G06T 7/73; G06V 10/44; G06V 40/10**

(86) International application number:
**PCT/KR2024/004889**

(87) International publication number:
**WO 2024/215124 (17.10.2024 Gazette 2024/42)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **12.04.2023 US 202363458936 P**

(71) Applicant: **LG Electronics Inc.**
**Yeongdeungpo-gu**
**Seoul 07336 (KR)**

(72) Inventors:
• **KIM, Jonghyun**
  **Seoul 06772 (KR)**
• **KIM, Bosang**
  **Seoul 06772 (KR)**

• **JIN, Lanying**
  **Seoul 06772 (KR)**
• **KWON, Dowoo**
  **Seoul 06772 (KR)**
• **LEE, Hyotae**
  **Seoul 06772 (KR)**
• **LEE, Jungho**
  **Seoul 06772 (KR)**
• **KIM, Jungpyo**
  **Seoul 06772 (KR)**
• **IM, Wonhyeok**
  **Seoul 06772 (KR)**

(74) Representative: **Vossius & Partner**
**Patentanwälte Rechtsanwälte mbB**
**Siebertstrasse 3**
**81675 München (DE)**

(54) **IMAGE-BASED HUMAN POSE ESTIMATION DEVICE AND METHOD**

(57)     The present disclosure relates to an apparatus and a method for estimating person pose based on image and method capable of removing low-reliability joint information, and the apparatus for estimating person pose includes a memory storing a hybrid pose estimation model; and a processor estimating a person pose within an image based on the hybrid pose estimation model, in which the processor may obtain image data; input the obtained image data into the pre-trained hybrid pose estimation model to extract coordinate values of key points corresponding to person join locations within the image data and probability values of a visibility map, respectively; check whether the probability value of a joint matching the coordinate value of the key point is equal to or less than a threshold value; and if the probability value of the joint matching the coordinate value of the key point is equal to or less than the threshold value, filter out and remove the key point of the corresponding joint.

FIG. 4

**Description**

[Technical Field]

The present disclosure relates to an apparatus and a method for estimating person pose based on image and method capable of removing low-reliability joint information.

[Background Art]

In general, artificial intelligence is a field of computer engineering and information technology that studies how to enable computers to think, learn, and develop themselves in ways that human intelligence can do, meaning that computers can imitate human intelligent behavior.

In addition, artificial intelligence does not exist in itself, but is directly or indirectly related to other fields of computer science. In particular, in modern times, attempts are being made to introduce artificial intelligence elements into various fields of information technology and utilize them to solve problems in those fields.

Recently, person pose estimation technology has been utilized in various application fields.

For example, person pose estimation technology is not only used in various fields such as exercise pose analysis, motion capture, pose correction, robot control, virtual reality, game and movie production, but can also be utilized in safety and security fields to detect abnormal movements and recognize and warn of dangerous situations.

A method for estimating person poses can be broadly classified into heatmap-less regression methods and heatmap-based estimation methods according to the architecture.

However, the heatmap-less regression methods had a problem in that unexpected results were produced due to key points that did not exist in the image scene when estimating the coordinates of each key point corresponding to the joint position.

In addition, the method for estimating person poses can remove non-existent key points using the predicted heatmap for each key point, but there was a problem that quantization errors occurred when obtaining key point coordinates through the heatmap, and it was difficult to distinguish key points when key points were densely arranged in the image.

Therefore, in the future, it is necessary to develop an apparatus for estimating person pose that can not only distinguish densely arranged key points but also filter out key points that do not exist in the image to improve the accuracy of person pose estimation.

[Disclosure]

[Technical Problem]

An object of the present disclosure is to solve the above-described problems and other problems.

An object of the present disclosure is to provide an apparatus and a method for estimating person pose based image that can improve the accuracy and speed of person pose estimation by filtering out key points of joints with low reliability by comparing the coordinate values of key points with the probability values of a visibility map.

In addition, an object of the present disclosure is to provide an apparatus and a method for estimating person pose based image that can increase the reliability of person pose estimation by clearly distinguishing densely arranged key points through learning to align a key point distribution map that visualizes key points with an uncorrelated visibility map.

[Technical Solution]

According to an embodiment of the present disclosure, an apparatus for estimating person pose includes a memory storing a hybrid pose estimation model; and a processor estimating a person pose within an image based on the hybrid pose estimation model, in which the processor may obtain image data; input the obtained image data into the pre-trained hybrid pose estimation model to extract coordinate values of key points corresponding to person join locations within the image data and probability values of a visibility map, respectively; check whether the probability value of a joint matching the coordinate value of the key point is equal to or less than a threshold value; and if the probability value of the joint matching the coordinate value of the key point is equal to or less than the threshold value, filter out and remove the key point of the corresponding joint.

According to an embodiment of the present disclosure, a method for estimating person pose may include obtaining image data; inputting the obtained image data into the pre-trained hybrid pose estimation model to extract the coordinate values of key points corresponding to person joint locations within the image data and the probability values of a visibility map; checking whether the probability value of a joint matching the coordinate value of the key point is equal to or less than a threshold value; and filtering and removing the key point of the corresponding joint if the probability value of the joint matching the coordinate value of the key point is equal to or less than the threshold value.

[Advantageous Effect]

According to one embodiment of the present disclosure, an apparatus for estimating person pose can improve the accuracy and speed of person pose estimation by filtering key points of joints with low reliability by comparing coordinate values of key points with probability values of a visibility map.

In addition, the present disclosure can increase the reliability of person pose estimation by clearly distinguishing densely arranged key points through learning to align a key point distribution map that visualizes key points with an uncorrelated visibility map.

In addition, the present disclosure can provide person pose estimation information optimized for each utilization mode by readjusting the threshold value for each utilization mode.

[Description of Drawings]

FIG. 1 illustrates an artificial intelligence apparatus according to an embodiment of the present disclosure.

FIG. 2 illustrates an artificial intelligence server according to an embodiment of the present disclosure.

FIG. 3 illustrates an artificial intelligence system according to an embodiment of the present disclosure.

FIG. 4 is a view for explaining the operation of an apparatus for estimating person pose according to an embodiment of the present disclosure.

FIG. 5 is a view for explaining a hybrid pose estimation model of an apparatus for estimating person pose according to an embodiment of the present disclosure.

FIG. 6 is a view for explaining a key point filtering process of an apparatus for estimating person pose according to an embodiment of the present disclosure.

FIG. 7 is a view for explaining the learning process of a hybrid pose estimation model of an apparatus for estimating person pose according to an embodiment of the present disclosure.

FIGS. 8a, 8b, 9a, 9b, 10a, and 10b are views illustrating key point filtering results of an apparatus for estimating person pose according to an embodiment of the present disclosure.

FIG. 11 is a table for explaining the performance of an apparatus for estimating person pose according to one embodiment of the present disclosure.

FIG. 12a and FIG. 12b are views applied to a driver monitoring system of an apparatus for estimating person pose according to one embodiment of the present disclosure.

FIGS. 13a, 13b, 14a, and 14b are views illustrating alignment learning results between key points of an apparatus for estimating person pose and a probability distribution of a visual map according to an embodiment of the present disclosure.

FIGS. 15 and 16 are views illustrating visual maps corresponding to the image scale of an apparatus for estimating person pose according to an embodiment of the present disclosure.

FIGS. 17 and 18 are views illustrating joint-specific pose estimation performance of an apparatus for estimating person pose according to an embodiment of the present disclosure.

FIG. 19 is a view for explaining a method for estimating pose of the apparatus for estimating person pose according to an embodiment of the present disclosure.

[Best Mode]

Hereinafter, embodiments of the present disclosure are described in more detail with reference to accompanying drawings and regardless of the drawings symbols, same or similar components are assigned with the same reference numerals and thus overlapping descriptions for those are omitted. The suffixes "module" and "unit" for components used in the description below are assigned or mixed in consideration of easiness in writing the specification and do not have distinctive meanings or roles by themselves. In the following description, detailed descriptions of well-known functions or constructions will be omitted since they would obscure the disclosure in unnecessary detail. Additionally, the accompanying drawings are used to help easily understanding embodiments disclosed herein but the technical idea of the present disclosure is not limited thereto. It should be understood that all of variations, equivalents or substitutes contained in the concept and technical scope of the present disclosure are also included.

It will be understood that the terms "first" and "second" are used herein to describe various components but these components should not be limited by these terms. These terms are used only to distinguish one component from other components.

In this disclosure below, when one part (or element, device, etc.) is referred to as being 'connected' to another part (or element, device, etc.), it should be understood that the former can be 'directly connected' to the latter, or 'electrically connected' to the latter via an intervening part (or element, device, etc.). It will be further understood that when one component is referred to as being 'directly connected' or 'directly linked' to another component, it means that no intervening component is present.

<Artificial Intelligence (AI)>

Artificial intelligence refers to the field of studying artificial intelligence or methodology for making artificial intelligence, and machine learning refers to the field of defining various issues dealt with in the field of artificial intelligence and studying methodology for solving the various issues. Machine learning is defined as an algorithm that enhances the performance of a certain task through a steady experience with the certain task.

An artificial neural network (ANN) is a model used in machine learning and may mean a whole model of problem-solving ability which is composed of artificial neurons (nodes) that form a network by synaptic connections. The artificial neural network can be defined by a connection pattern between neurons in different layers, a learning process for updating model parameters, and an activation function for generating an output value.

The artificial neural network may include an input layer, an output layer, and optionally one or more hidden layers. Each layer includes one or more neurons, and the artificial neural network may include a synapse that links neurons to neurons. In the artificial neural network, each neuron may output the function value of the activation function for input signals, weights, and deflections input through the synapse.

Model parameters refer to parameters determined through learning and include a weight value of synaptic connection and deflection of neurons. A hyperparameter means a parameter to be set in the machine learning algorithm before learning, and includes a learning rate, a repetition number, a mini batch size, and an initialization function.

The purpose of the learning of the artificial neural network may be to determine the model parameters that minimize a loss function. The loss function may be used as an index to determine optimal model parameters in the learning process of the artificial neural network.

Machine learning may be classified into supervised learning, unsupervised learning, and reinforcement learning according to a learning method.

The supervised learning may refer to a method of training an artificial neural network in a state in which a label for learning data is given, and the label may mean the correct answer (or result value) that the artificial neural network must infer when the learning data is input to the artificial neural network. The unsupervised learning may refer to a method of training an artificial neural network in a state in which a label for learning data is not given. The reinforcement learning may refer to a learning method in which an agent defined in a certain environment learns to select a behavior or a behavior sequence that maximizes cumulative compensation in each state.

Machine learning, which is implemented as a deep neural network (DNN) including a plurality of hidden layers among artificial neural networks, is also referred to as deep learning, and the deep learning is part of machine learning. In the following, machine learning is used to mean deep learning.

<Robot>

A robot may refer to a machine that automatically processes or operates a given task by its own ability. In particular, a robot having a function of recognizing an environment and performing a self-determination operation may be referred to as an intelligent robot.

Robots may be classified into industrial robots, medical robots, home robots, military robots, and the like according to the use purpose or field.

The robot includes a driving unit may include an actuator or a motor and may perform various physical operations such as moving a robot joint. In addition, a movable robot may include a wheel, a brake, a propeller, and the like in a driving unit, and may travel on the ground through the driving unit or fly in the air.

<Self-Driving>

Self-driving refers to a technique of driving for oneself, and a self-driving vehicle refers to a vehicle that travels without an operation of a user or with a minimum operation of a user.

For example, the self-driving may include a technology for maintaining a lane while driving, a technology for automatically adjusting a speed, such as adaptive cruise control, a technique for automatically traveling along a predetermined route, and a technology for automatically setting and traveling a route when a destination is set.

The vehicle may include a vehicle having only an internal combustion engine, a hybrid vehicle having an internal combustion engine and an electric motor together, and an electric vehicle having only an electric motor, and may include not only an automobile but also a train, a motorcycle, and the like.

In this case, the self-driving vehicle may be regarded as a robot having a self-driving function.

<eXtended Reality (XR)>

Extended reality is collectively referred to as virtual reality (VR), augmented reality (AR), and mixed reality (MR). The VR technology provides a real-world object and background only as a CG image, the AR technology provides a virtual CG image on a real object image, and the MR technology is a computer graphic technology that mixes and combines virtual objects into the real world.

The MR technology is similar to the AR technology in that the real object and the virtual object are illustrated together. However, in the AR technology, the virtual object is used in the form that complements the real object, whereas in the MR technology, the virtual object and the real object are used in an equal manner.

The XR technology may be applied to a head-mount display (HMD), a head-up display (HUD), a mobile phone, a tablet PC, a laptop, a desktop, a TV, a digital signage, and the like. A device to which the XR technology is applied may be referred to as an XR device.

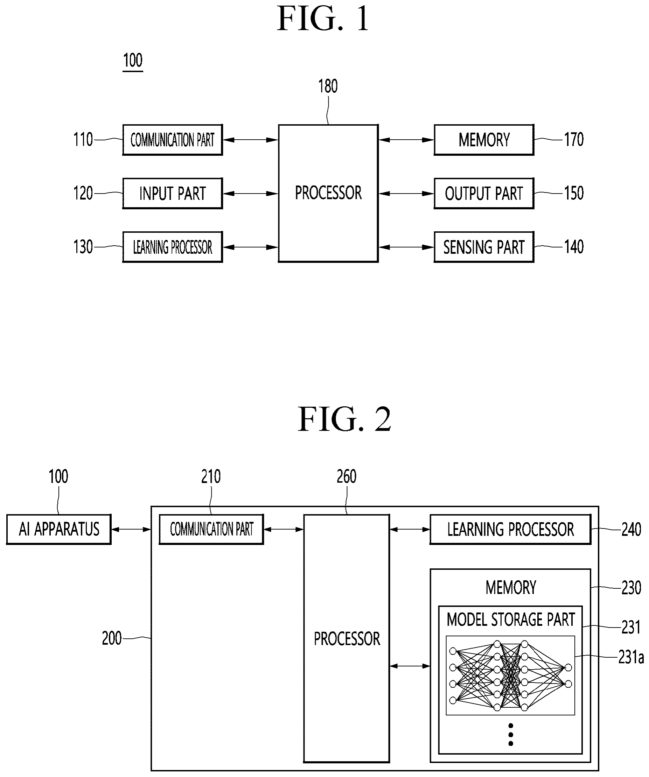

FIG. 1 illustrates an AI device 100 according to an embodiment of the present disclosure.

The AI device (or an AI apparatus) 100 may be implemented by a stationary device or a mobile device, such as a TV, a projector, a mobile phone, a smartphone, a desktop computer, a notebook, a digital broadcasting terminal, a personal digital assistant (PDA), a portable multimedia player (PMP), a navigation device, a tablet PC, a wearable device, a set-top box (STB), a DMB receiver, a radio, a washing machine, a refrigerator, a desktop computer, a digital signage, a robot, a vehicle, and the like.

Referring to FIG. 1, the AI device 100 may include a communication unit 110, an input unit 120, a learning processor 130, a sensing unit 140, an output unit 150, a memory 170, and a processor 180.

The communication unit 110 may transmit and receive data to and from external devices such as other AI devices 100a to 100e and the AI server 200 by using wire/wireless communication technology. For example, the communication unit 110 may transmit and receive sensor information, a user input, a learning model, and a control signal to and from external devices.

The communication technology used by the communication unit 110 includes GSM (Global System for Mobile communication), CDMA (Code Division Multi Access), LTE (Long Term Evolution), 5G, WLAN (Wireless LAN), Wi-Fi (Wireless-Fidelity), Bluetooth™, RFID (Radio Frequency Identification), Infrared Data Association (IrDA), ZigBee, NFC (Near Field Communication), and the like.

The input unit 120 may obtain various kinds of data.

In this case, the input unit 120 may include a camera for inputting a video signal, a microphone for receiving an audio signal, and a user input unit for receiving information from a user. The camera or the microphone may be treated as a sensor, and the signal obtained from the camera or the microphone may be referred to as sensing data or sensor information.

The input unit 120 may obtain a learning data for model learning and an input data to be used if an output is obtained by using learning model. The input unit 120 may obtain raw input data. In this case, the processor 180 or the learning processor 130 may extract an input feature by preprocessing the input data.

The learning processor 130 may learn a model composed of an artificial neural network by using learning data. The learned artificial neural network may be referred to as a learning model. The learning model may be used to an infer result value for new input data rather than learning data, and the inferred value may be used as a basis for determination to perform a certain operation.

At this time, the learning processor 130 may perform AI processing together with the learning processor 240 of the

AI server 200 of FIG. 2.

At this time, the learning processor 130 may include a memory integrated or implemented in the AI device 100. Alternatively, the learning processor 130 may be implemented by using the memory 170, an external memory directly connected to the AI device 100, or a memory held in an external device.

The sensing unit 140 may obtain at least one of internal information about the AI device 100, ambient environment information about the AI device 100, and user information by using various sensors.

Examples of the sensors included in the sensing unit 140 may include a proximity sensor, an illuminance sensor, an acceleration sensor, a magnetic sensor, a gyro sensor, an inertial sensor, an RGB sensor, an IR sensor, a fingerprint recognition sensor, an ultrasonic sensor, an optical sensor, a microphone, a lidar, and a radar.

The output unit 150 may generate an output related to a visual sense, an auditory sense, or a haptic sense.

At this time, the output unit 150 may include a display unit for outputting time information, a speaker for outputting auditory information, and a haptic module for outputting haptic information.

The memory 170 may store data that supports various functions of the AI device 100. For example, the memory 170 may store input data obtained by the input unit 120, learning data, a learning model, a learning history, and the like.

The processor 180 may determine at least one executable operation of the AI device 100 based on information determined or generated by using a data analysis algorithm or a machine learning algorithm. The processor 180 may control the components of the AI device 100 to execute the determined operation.

To this end, the processor 180 may request, search, receive, or utilize data of the learning processor 130 or the memory 170. The processor 180 may control the components of the AI device 100 to execute the predicted operation or the operation determined to be desirable among the at least one executable operation.

When the connection of an external device is required to perform the determined operation, the processor 180 may generate a control signal for controlling the external device and may transmit the generated control signal to the external device.

The processor 180 may obtain intention information for the user input and may determine the user's requirements based on the obtained intention information.

The processor 180 may obtain the intention information corresponding to the user input by using at least one of a speech to text (STT) engine for converting speech input into a text string or a natural language processing (NLP) engine for obtaining intention information of a natural language.

At least one of the STT engine or the NLP engine may be configured as an artificial neural network, at least part of which is learned according to the machine learning algorithm. At least one of the STT engine or the NLP engine may be learned by the learning processor 130, may be learned by the learning processor 240 of the AI server 200, or may be learned by their distributed processing.

The processor 180 may collect history information including the operation contents of the AI apparatus 100 or the user's feedback on the operation and may store the collected history information in the memory 170 or the learning processor 130 or transmit the collected history information to the external device such as the AI server 200. The collected history information may be used to update the learning model.

The processor 180 may control at least part of the components of AI device 100 so as to drive an application program stored in the memory 170. Furthermore, the processor 180 may operate two or more of the components included in the AI device 100 in combination so as to drive the application program.

FIG. 2 illustrates an AI server 200 according to an embodiment of the present disclosure.

Referring to FIG. 2, the AI server 200 may refer to a device that learns an artificial neural network by using a machine learning algorithm or uses a learned artificial neural network/ The AI server 200 may include a plurality of servers to perform distributed processing or may be defined as a 5G network. In this case, the AI server 200 may be included as a partial configuration of the AI device 100, and may perform at least part of the AI processing together.

The AI server 200 may include a communication unit 210, a memory 230, a learning processor 240, a processor 260, and the like.

The communication unit 210 may transmit and receive data to and from an external device such as the AI device 100.

The memory 230 may include a model storage unit 231. The model storage unit 231 may store a learning or learned model (or an artificial neural network 231a) through the learning processor 240.

The learning processor 240 may learn the artificial neural network 231a by using the learning data. The learning model may be used in a state of being mounted on the AI server 200 of the artificial neural network, or may be used in a state of being mounted on an external device such as the AI device 100.

The learning model may be implemented in hardware, software, or a combination of hardware and software. If all or part of the learning models are implemented in software, one or more instructions that constitute the learning model may be stored in memory 230.

The processor 260 may infer the result value for new input data by using the learning model and may generate a response or a control command based on the inferred result value.

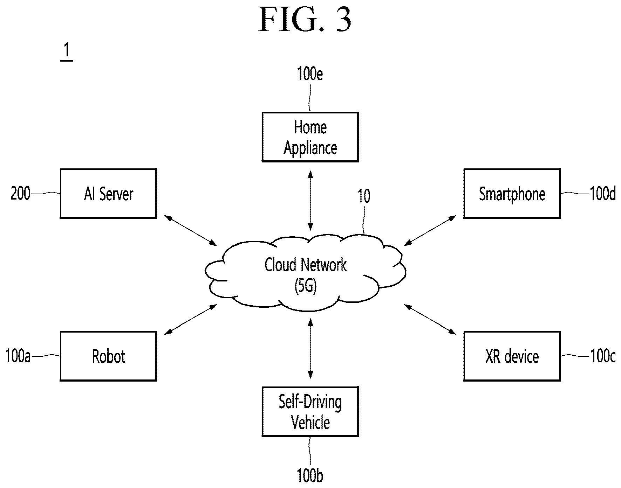

FIG. 3 is a view of an AI system 1 according to an embodiment of the present invention.

Referring to FIG. 3, in the AI system 1, at least one of an AI server 200, a robot 100a, a self-driving vehicle 100b, an XR device 100c, a smartphone 100d, or a home appliance 100e is connected to a cloud network 10. The robot 100a, the self-driving vehicle 100b, the XR device 100c, the smartphone 100d, or the home appliance 100e, to which the AI technology is applied, may be referred to as AI devices 100a to 100e.

The cloud network 10 may refer to a network that forms part of a cloud computing infrastructure or exists in a cloud computing infrastructure. The cloud network 10 may be configured by using a 3G network, a 4G or LTE network, or a 5G network.

In other words, the devices 100a to 100e and 200 configuring the AI system 1 may be connected to each other through the cloud network 10. In particular, each of the devices 100a to 100e and 200 may communicate with each other through a base station, but may directly communicate with each other without using a base station.

The AI server 200 may include a server that performs AI processing and a server that performs operations on big data.

The AI server 200 may be connected to at least one of the AI devices constituting the AI system 1, that is, the robot 100a, the self-driving vehicle 100b, the XR device 100c, the smartphone 100d, or the home appliance 100e through the cloud network 10, and may assist at least part of AI processing of the connected AI devices 100a to 100e.

At this time, the AI server 200 may learn the artificial neural network according to the machine learning algorithm instead of the AI devices 100a to 100e, and may directly store the learning model or transmit the learning model to the AI devices 100a to 100e.

At this time, the AI server 200 may receive input data from the AI devices 100a to 100e, may infer the result value for the accommodated input data by using the learning model, may generate a response or a control command based on the inferred result value, and may transmit the response or the control command to the AI devices 100a to 100e.

Alternatively, the AI devices 100a to 100e may infer the result value for the input data by directly using the learning model, and may generate the response or the control command based on the inference result.

Hereinafter, various embodiments of the AI devices 100a to 100e to which the above-described technology is applied will be described. The AI devices 100a to 100e illustrated in FIG. 3 may be regarded as a specific embodiment of the AI device 100 illustrated in FIG. 1.

<AI + Robot>

The robot 100a, to which the AI technology is applied, may be implemented as a guide robot, a carrying robot, a cleaning robot, a wearable robot, an entertainment robot, a pet robot, an unmanned flying robot, or the like.

The robot 100a may include a robot control module for controlling the operation, and the robot control module may refer to a software module or a chip implementing the software module by hardware.

The robot 100a may obtain state information about the robot 100a by using sensor information obtained from various kinds of sensors, may detect (recognize) surrounding environment and objects, may generate map data, may determine the route and the travel plan, may determine the response to user interaction, or may determine the operation.

The robot 100a may use the sensor information obtained from at least one sensor among the lidar, the radar, and the camera so as to determine the travel route and the travel plan.

The robot 100a may perform the above-described operations by using the learning model provided as at least one artificial neural network. For example, the robot 100a may recognize the surrounding environment and the objects by using the learning model, and may determine the operation by using the recognized surrounding information or object information. The learning model may be learned directly from the robot 100a or may be learned from an external device such as the AI server 200.

At this time, the robot 100a may perform the operation by generating the result by directly using the learning model, but the sensor information may be transmitted to the external device such as the AI server 200 and the generated result may be accommodated to perform the operation.

The robot 100a may use at least one of the map data, the object information detected from the sensor information, or the object information obtained from the external apparatus to determine the travel route and the travel plan, and may control the driving unit such that the robot 100a travels along the determined travel route and travel plan.

The map data may include object identification information about various objects arranged in the space in which the robot 100a moves. For example, the map data may include object identification information about fixed objects such as walls and doors and movable objects such as pollen and desks. The object identification information may include a name, a type, a distance, and a position.

In addition, the robot 100a may perform the operation or travel by controlling the driving unit based on the control/interaction of the user. At this time, the robot 100a may obtain the intention information of the interaction due to the user's operation or speech utterance, and may determine the response based on the obtained intention information, and may perform the operation.

<AI + Self-Driving>

The self-driving vehicle 100b, to which the AI technology is applied, may be implemented as a mobile robot, a vehicle, an unmanned flying vehicle, or the like.

The self-driving vehicle 100b may include a self-driving control module for controlling a self-driving function, and the self-driving control module may refer to a software module or a chip implementing the software module by hardware. The self-driving control module may be included in the self-driving vehicle 100b as a component thereof, but may be implemented with separate hardware and connected to the outside of the self-driving vehicle 100b.

The self-driving vehicle 100b may obtain state information about the self-driving vehicle 100b by using sensor information obtained from various kinds of sensors, may detect (recognize) surrounding environment and objects, may generate map data, may determine the path and the travel plan, or may determine the operation.

Like the robot 100a, the self-driving vehicle 100b may use the sensor information obtained from at least one sensor among the lidar, the radar, and the camera so as to determine the travel path and the travel plan.

In particular, the self-driving vehicle 100b may recognize the environment or objects for an area covered by a field of view or an area over a certain distance by receiving the sensor information from external devices, or may receive directly recognized information from the external devices.

The self-driving vehicle 100b may perform the above-described operations by using the learning model composed of at least one artificial neural network. For example, the self-driving vehicle 100b may recognize the surrounding environment and the objects by using the learning model, and may determine the traveling movement line by using the recognized surrounding information or object information. The learning model may be learned directly from the self-driving vehicle 100a or may be learned from an external device such as the AI server 200.

In this case, the self-driving vehicle 100b may perform the operation by generating the result by directly using the learning model, but the sensor information may be transmitted to the external device such as the AI server 200 and the generated result may be received to perform the operation.

The self-driving vehicle 100b may use at least one of the map data, the object information detected from the sensor information, or the object information obtained from the external apparatus to determine the travel path and the travel plan, and may control the driving device such that the self-driving vehicle 100b travels along the determined travel path and travel plan.

The map data may include object identification information about various objects arranged in the space (for example, road) in which the self-driving vehicle 100b travels. For example, the map data may include object identification information about fixed objects such as street lamps, rocks, and buildings and movable objects such as vehicles and pedestrians. The object identification information may include a name, a type, a distance, and a position.

In addition, the self-driving vehicle 100b may perform the operation or travel by controlling the driving device based on the control/interaction of the user. In this case, the self-driving vehicle 100b may obtain the intention information of the interaction due to the user's operation or speech utterance, and may determine the response based on the obtained intention information, and may perform the operation.

<AI+XR>

The XR device 100c, to which the AI technology is applied, may be implemented by a head-mount display (HMD), a head-up display (HUD) provided in the vehicle, a television, a mobile phone, a smartphone, a computer, a wearable device, a home appliance, a digital signage, a vehicle, a fixed robot, a mobile robot, or the like.

The XR device 100c may analyzes three-dimensional point cloud data or image data obtained from various sensors or the external devices, generate position data and attribute data for the three-dimensional points, obtain information about the surrounding space or the real object, and render to output the XR object to be output. For example, the XR device 100c may output an XR object including the additional information about the recognized object in correspondence to the recognized object.

The XR device 100c may perform the above-described operations by using the learning model composed of at least one artificial neural network. For example, the XR device 100c may recognize the real object from the three-dimensional point cloud data or the image data by using the learning model, and may provide information corresponding to the recognized real object. The learning model may be directly learned from the XR device 100c, or may be learned from the external device such as the AI server 200.

In this case, the XR device 100c may perform the operation by generating the result by directly using the learning model, but the sensor information may be transmitted to the external device such as the AI server 200 and the generated result may be received to perform the operation.

<AI + Robot + Self-Driving>

The robot 100a, to which the AI technology and the self-driving technology are applied, may be implemented as a guide robot, a carrying robot, a cleaning robot, a wearable robot, an entertainment robot, a pet robot, an unmanned flying robot, or the like.

The robot 100a, to which the AI technology and the self-driving technology are applied, may refer to the robot itself having the self-driving function or the robot 100a interacting with the self-driving vehicle 100b.

The robot 100a having the self-driving function may collectively refer to a device that moves for itself along the given movement line without the user's control or moves for itself by determining the movement line by itself.

The robot 100a and the self-driving vehicle 100b having the self-driving function may use a common sensing method so as to determine at least one of the travel route or the travel plan. For example, the robot 100a and the self-driving vehicle 100b having the self-driving function may determine at least one of the travel route or the travel plan by using the information sensed through the lidar, the radar, and the camera.

The robot 100a that interacts with the self-driving vehicle 100b exists separately from the self-driving vehicle 100b and may perform operations interworking with the self-driving function of the self-driving vehicle 100b or interworking with the user who rides on the self-driving vehicle 100b.

At this time, the robot 100a interacting with the self-driving vehicle 100b may control or assist the self-driving function of the self-driving vehicle 100b by obtaining sensor information on behalf of the self-driving vehicle 100b and providing the sensor information to the self-driving vehicle 100b, or by obtaining sensor information, generating environment information or object information, and providing the information to the self-driving vehicle 100b.

Alternatively, the robot 100a interacting with the self-driving vehicle 100b may monitor the user boarding the self-driving vehicle 100b, or may control the function of the self-driving vehicle 100b through the interaction with the user. For example, when it is determined that the driver is in a drowsy state, the robot 100a may activate the self-driving function of the self-driving vehicle 100b or assist the control of the driving unit of the self-driving vehicle 100b. The function of the self-driving vehicle 100b controlled by the robot 100a may include not only the self-driving function but also the function provided by the navigation system or the audio system provided in the self-driving vehicle 100b.

Alternatively, the robot 100a that interacts with the self-driving vehicle 100b may provide information or assist the function to the self-driving vehicle 100b outside the self-driving vehicle 100b. For example, the robot 100a may provide traffic information including signal information and the like, such as a smart signal, to the self-driving vehicle 100b, and automatically connect an electric charger to a charging port by interacting with the self-driving vehicle 100b like an automatic electric charger of an electric vehicle.

<AI + Robot + XR>

The robot 100a, to which the AI technology and the XR technology are applied, may be implemented as a guide robot, a carrying robot, a cleaning robot, a wearable robot, an entertainment robot, a pet robot, an unmanned flying robot, a drone, or the like.

The robot 100a, to which the XR technology is applied, may refer to a robot subjected to control/interaction in an XR image. In this case, the robot 100a may be separated from the XR device 100c and interwork with each other.

If the robot 100a, which is subjected to control/interaction in the XR image, may obtain the sensor information from the sensors including the camera, the robot 100a or the XR device 100c may generate the XR image based on the sensor information, and the XR device 100c may output the generated XR image. The robot 100a may operate based on the control signal input through the XR device 100c or the user's interaction.

For example, the user may confirm the XR image corresponding to the time point of the robot 100a interworking remotely through the external device such as the XR device 100c, adjust the self-driving travel path of the robot 100a through interaction, control the operation or driving, or confirm the information about the surrounding object.

<AI + Self-Driving + XR>

The self-driving vehicle 100b, to which the AI technology and the XR technology are applied, may be implemented as a mobile robot, a vehicle, an unmanned flying vehicle, or the like.

The self-driving vehicle 100b, to which the XR technology is applied, may refer to a self-driving vehicle having a means for providing an XR image or a self-driving vehicle subjected to control/interaction in an XR image. Particularly, the self-driving vehicle 100b In other words subjected to control/interaction in the XR image may be distinguished from the XR device 100c and interwork with each other.

The self-driving vehicle 100b having the means for providing the XR image may obtain the sensor information from the sensors including the camera and output the generated XR image based on the obtained sensor information. For example, the self-driving vehicle 100b may include an HUD to output an XR image, thereby providing a passenger with a real object or an XR object corresponding to an object in the screen.

In this case, if the XR object is output to the HUD, at least part of the XR object may be outputted so as to overlap the actual object to which the passenger's gaze is directed. Meanwhile, if the XR object is output to the display provided in the self-driving vehicle 100b, at least part of the XR object may be output so as to overlap the object in the screen. For example, the self-driving vehicle 100b may output XR objects corresponding to objects such as a lane, another vehicle, a traffic light, a traffic sign, a two-wheeled vehicle, a pedestrian, a building, and the like.

If the self-driving vehicle 100b, which is subjected to control/interaction in the XR image, may obtain the sensor information from the sensors including the camera, the self-driving vehicle 100b or the XR device 100c may generate the XR image based on the sensor information, and the XR device 100c may output the generated XR image. The self-driving vehicle 100b may operate based on the control signal input through the external device such as the XR device 100c or the user's interaction.

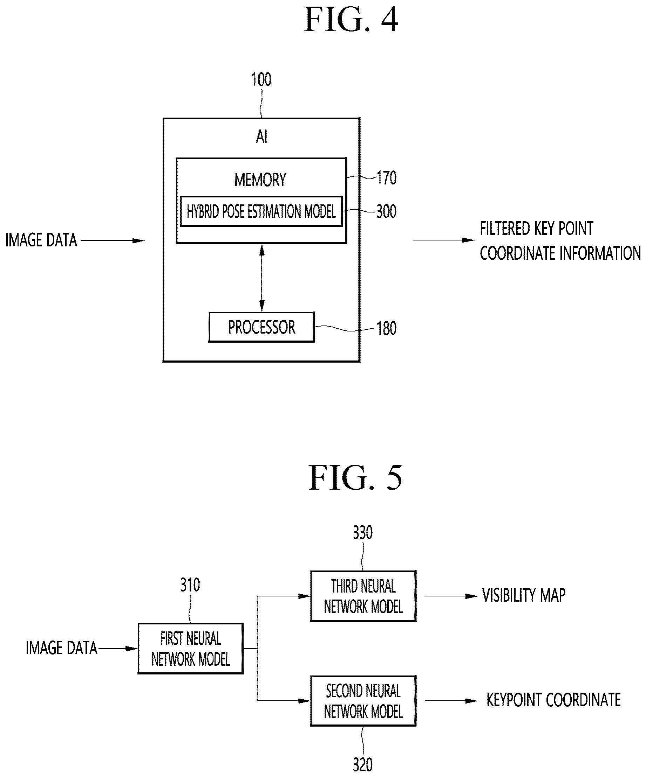

FIG. 4 is a view for explaining the operation of an apparatus for estimating person pose according to an embodiment of the present disclosure.

As illustrated in FIG. 4, the apparatus for estimating person pose 100 of the present disclosure may include a memory 170 that stores a hybrid pose estimation model 300, and a processor 180 that estimates a person pose in an image based on the hybrid pose estimation model 300.

Here, the processor 180 obtains image data, inputs the obtained image data into the pre-learned hybrid pose estimation model 300, to extract the coordinate values of key points corresponding to person joint locations in the image data and the probability values of the visibility map, respectively, checks whether the probability value of the joint matching the coordinate value of the key point is equal to or less than a threshold value, and if the probability value of the joint matching the coordinate value of the key point is equal to or less than the threshold value, the key point of the corresponding joint can be filtered and removed.

Here, the processor 180 can extract feature information of image data through a hybrid estimation model 300, and, based on the feature information of the image data, simultaneously extract coordinate values of key points corresponding to person joint locations in the image data based on feature information of the image data and probability distribution values of a visibility map corresponding to person joint locations in the image data.

For example, the hybrid pose estimation model 300 may include at least one first neural network model that extracts feature information of image data, a second neural network model that extracts coordinate values of key points corresponding to person joint locations in the image data based on the feature information of the image data, and a third neural network model that extracts probability distribution values of a visibility map corresponding to person joint locations in the image data based on the feature information of the image data.

Here, the first neural network model is serially arranged with the second neural network model and the third neural network model, respectively, so that the feature information of the extracted image data can be simultaneously output to the second neural network model and the third neural network model.

Additionally, the second neural network model and the third neural network model are arranged in parallel to each other so that the person joint locations in the image data can be simultaneously estimated based on feature information of the image data.

Next, the third neural network model can be pre-trained to generate a key point distribution map based on the coordinate values of key points corresponding to person joint locations in the image data, and to compare the correlation between the joint probabilities of an uncorrelated visibility map and the joint probabilities of the key point distribution map so that the joint probabilities of the uncorrelated visibility map are aligned with the joint probabilities of the key point distribution map.

Here, the third neural network model generates a plurality of key point distribution maps and a plurality of uncorrelated visibility maps for each person joint existing in the image data, and performs learning to extract the key point distribution maps and uncorrelated visibility maps corresponding to the same joint and align the maps, and when learning to align the key point distribution maps and uncorrelated visibility maps for all joints of the person existing in the image data is completed, can terminate learning.

Additionally, the number of the first network model can increase or decrease in proportion to the size and computational amount of the input image data.

Next, the hybrid pose estimation model 300 can be pre-trained to extract coordinate values of key points corresponding to person joint locations in image data, generate a key point distribution map based on the coordinate values of the extracted key points, generate an uncorrelated visibility map corresponding to person joint locations in the image data, and compare the correlation between the joint probabilities of the uncorrelated visualization and the joint probabilities of the key point distribution map so that the joint probabilities of the uncorrelated visibility map are aligned with the joint probabilities of the key point distribution map.

Here, the hybrid pose estimation model 300 generates a plurality of key point distribution maps and a plurality of uncorrelated visibility maps for each person joint existing in the image data, extracts the key point distribution maps and uncorrelated visibility maps corresponding to the same joints to perform learning to align the maps, and when learning to align the key point distribution maps and uncorrelated visibility maps for all joints of the person existing in the image data is completed, can terminate pre-learning.

For example, when generating a key point distribution map, the hybrid pose estimation model 300 can perform learning by generating a key point distribution map based on the following mathematical expression 1.

## 【Mathematical Expression 1】

$$d_{u,v,a} = \Psi(c_{i,j,a}) = \rho e^{-((u-c_{xk})^2 + (v-c_{yk})^2)/2\sigma^2}$$

Here, $d_{u,v,a}$ is the key point distribution map, $\Psi$ is the transformation function, $c_{i,j,a}$ is the key point coordinates, $\sigma$ is the standard deviation, and $\rho$ is the object presence probability.

In addition, the hybrid pose estimation model 300 can perform learning by generating a set of key point distribution maps based on the following mathematical expression 2.

## 【Mathematical Expression 2】

$$D^s = \max \left[ d_{0,0,a}, d_{0,1,a}, \ldots, d_{i,j,a} \right]_{a=1}^{Na}$$

Here, max operates pixel-wise to filter out low activations of key points in the same class.

In addition, the hybrid pose estimation model 300 can perform learning by applying self-correlation loss to the visibility map and key point distribution map based on the following mathematical expression 3.

## 【Mathematical Expression 3】

$$L_{corr} = 1 - \left( \frac{\sum (D^s - \overline{D^s}) * (V^s - \overline{V^s})}{\sqrt{\sum (D^s - \overline{D^s})^2} * \sqrt{\sum (V^s - \overline{V^s})^2} + \varepsilon} \right)^2$$

Here, $\overline{(.)}$ is the output mean.

In addition, when extracting key point coordinate values, the processor 180 can collectively estimate key points corresponding to person joint locations existing in the image data based on the feature information of the image data, and extract coordinate values for the estimated key points.

Here, when a user input for selecting a specific purpose utilization mode is received, the processor 180 can obtain essential joint information required in the specific purpose utilization mode and selectively extract key points corresponding to essential joint positions among all joint positions existing in the image data based on the essential joint information.

For example, a specific purpose utilization mode may include all utilization modes that can be utilized for various purposes, such as surveillance camera use, driver driving pose monitoring mode, or the like.

Here, when a user input for selecting a specific part of a person other than a person joint is received, the processor 180 can collectively estimate key points corresponding to the person joint locations existing in the image data and key points corresponding to the specific part locations.

Next, when extracting the probability value of the visibility map, the processor 180 can create a visibility map for each person joint location existing in the image data based on the feature information of the image data, and extract a probability value corresponding to the person joint location existing in the visibility map.

Here, when generating a visibility map, the processor 180 can generate a visibility map corresponding to the same joint as the specific joint from which the coordinate value of the key point is extracted when the coordinate value of the key point for a specific joint among person joints is extracted.

Additionally, the processor 180 can generate a number of visibility maps equal to the number of joints from which key point coordinate values are extracted.

Here, the processor 180 can increase or decrease the number of visibility maps in proportion to the number of joints from which key point coordinate values are extracted.

Additionally, the processor 180 can generate a visibility map using a pre-learned hybrid pose estimation model that aligns a key point distribution map corresponding to the same joint and an uncorrelated visibility map when generating a visibility map.

In addition, when extracting probability values, the processor 180 can extract probability values corresponding to person joint locations for each visibility map, tabulate the probability values, and store the probability value table.

Here, when storing the probability value table, the processor 180 can check whether utilization mode information for the probability value table exists, and if utilization mode information exists, can store the probability value table for each utilization mode.

In addition, when extracting the probability value of the visibility map, the processor 180 can obtain utilization mode information for the image data, and check whether a probability value table having the same utilization mode is stored in the memory based on the utilization mode information, and if a probability value table having the same utilization mode exists, can extract the probability value of the joint matching the coordinate value of the key point from the probability value table having the same utilization mode.

For example, when generating a visibility map, the processor 180 may generate the visibility map based on the following mathematical expression 4.

【Mathematical Expression 4】

$$v_{c'_{xk},c'_{yk},a,k} = V^s(c_{xk},c_{yk},a,k)$$

Here, $v_{c'_{xk},c'_{yk},a,k}$ is the k-th key point located at the $(c'_{xk},c'_{yk})$ coordinates within the image, and $V^s$ is a visual map containing the k-th key point.

Next, the processor 180 can check whether there is a probability value of a joint matching the coordinate value of the key point from the probability value of the visibility map when the coordinate value of the key point and the probability value of the visibility map are extracted, and if there is a probability value of the matching joint, can check whether the probability value of the matching joint is equal to or less than a preset threshold value.

Here, the processor 180 can maintain the key point of the joint corresponding to the key point coordinate value if the probability value of the joint matching the coordinate value of the key point from the probability value of the visibility map does not exist.

Additionally, the processor 180 can obtain shooting environment information of the image data and readjust the threshold value if the shooting environment information of the image data is included in the threshold value change condition.

In some cases, when a user input for selecting a specific purpose utilization mode is received, the processor 180 may check whether a threshold value corresponding to the specific purpose utilization mode is pre-stored in the memory, and if a threshold value corresponding to the specific purpose utilization mode is pre-stored in the memory, may readjust the currently set threshold value to a threshold value corresponding to the specific purpose utilization mode.

Here, the processor 180 can readjust the threshold value to a higher value than the currently set threshold value if the specific purpose utilization mode is a mode for person safety, such as a driver monitoring system.

In another case, when a user input requesting threshold value readjustment is received, the processor 180 may obtain a threshold value to be readjusted from the user input and readjust the currently set threshold value to the threshold value to be readjusted.

Here, when a user input requesting readjustment of a threshold value is received, the processor 180 provides a threshold value adjustment list window including a plurality of threshold value items, and when a user input is received for selecting a predetermined threshold value item from the plurality of threshold value adjustment list windows, the processor 180 can readjust the currently set threshold value to a threshold value corresponding to the selected threshold value item.

In this way, the present disclosure provides an apparatus for estimating person pose that can improve the accuracy and speed of person pose estimation by filtering out key points of joints with low reliability by comparing the coordinate values of key points with the probability values of a visibility map.

In addition, the present disclosure can increase the reliability of person pose estimation by clearly distinguishing densely arranged key points through learning to align a key point distribution map that visualizes key points with an uncorrelated visibility map.

In addition, the present disclosure can provide person pose estimation information optimized for each utilization mode by readjusting the threshold value for each utilization mode.

FIG. 5 is a view for explaining a hybrid pose estimation model of an apparatus for estimating person pose according to an embodiment of the present disclosure.

As illustrated in FIG. 5, the present disclosure can extract feature information of image data through a hybrid estimation model, and simultaneously extract coordinate values of key points corresponding to person joint locations within the image data and probability distribution values of a visibility map corresponding to person joint locations within the image data based on the feature information of the image data.

The hybrid pose estimation model may include at least one first neural network model 310 that extracts feature information of image data, a second neural network model 320 that extracts coordinate values of key points corresponding to person joint locations in the image data based on the feature information of the image data, and a third neural network model 330 that extracts probability distribution values of a visibility map corresponding to person joint locations in the image data based on the feature information of the image data.

Here, the first neural network model 310 is serially arranged with the second neural network model 320 and the third neural network model 330, so that the feature information of the extracted image data can be simultaneously output to the second neural network model 320 and the third neural network model 330.

In addition, the second neural network model 320 and the third neural network model 330 are arranged in parallel to each other and can simultaneously estimate the position of person joints in the image data based on the feature information of the image data.

Next, the third neural network model 330 can be pre-trained to generate a key point distribution map based on the coordinate values of key points corresponding to person joint locations in the image data, and to compare the correlation between the joint probabilities of an uncorrelated visibility map and the joint probabilities of the key point distribution map so that the joint probabilities of the uncorrelated visibility map are aligned with the joint probabilities of the key point distribution map.

Here, the third neural network model 330 can generate a plurality of key point distribution maps and a plurality of uncorrelated visibility maps for each person joint existing in the image data, extract the key point distribution maps and uncorrelated visibility maps corresponding to the same joints to perform learning to align the maps, when learning to align the key point distribution maps and uncorrelated visibility maps for all joints of the person existing in the image data is completed, can terminate learning.

In some cases, the number of first network models 310 may increase or decrease in proportion to the size and amount of computation of the input image data.

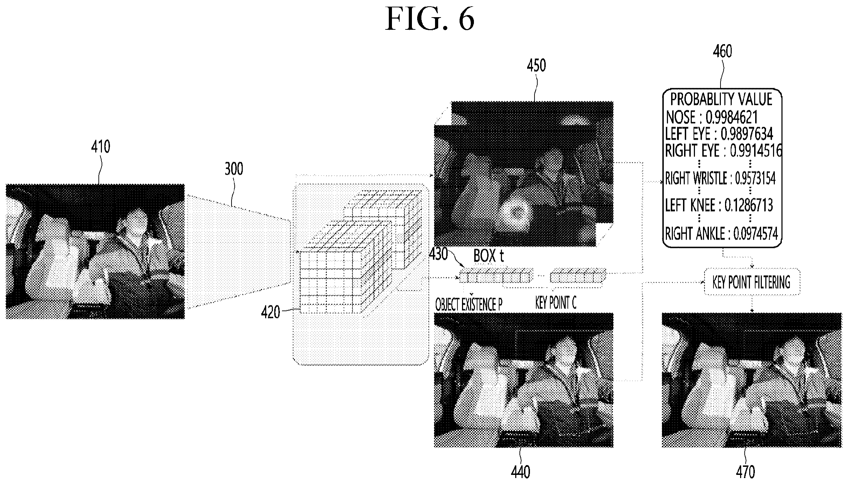

FIG. 6 is a view for explaining a key point filtering process of an apparatus for estimating person pose according to an embodiment of the present disclosure.

As illustrated in FIG. 6, the present disclosure can obtain image data 410.

In addition, the present disclosure can input obtained image data 410 into a pre-learned hybrid pose estimation model 300.

Next, the pre-learned hybrid pose estimation model 300 can analyze the features of image data and extract compressed information.

Here, the present disclosure can extract feature information of image data from a grid block 420 including a plurality of grid cells 430.

At this time, each grid cell 430 may include object existence information p, box information t, and key point information c.

Next, the present disclosure can extract the coordinate values of key points 440 corresponding to person joint locations in image data and the probability values 460 of a visibility map 450 through a pre-learned hybrid pose estimation model 300.

In addition, the present disclosure can extract pose estimation information including highly reliable key points 470 by checking whether the probability value of a joint matching the coordinate value of a key point is equal to or less than a threshold value, and filtering and removing the key point of the corresponding joint if the probability value of a joint matching the coordinate value of a key point is equal to or less than the threshold value.

Here, the present disclosure can extract feature information of image data through a hybrid estimation model 300, and simultaneously extract coordinate values of key points 440 corresponding to person joint locations in the image data and probability distribution values of visibility maps 450 corresponding to person joint locations in the image data 410 based on the feature information of the image data.

In addition, the present disclosure can collectively estimate key points 440 corresponding to person joint locations existing in image data 410 based on feature information of image data when extracting key point coordinate values, and extract coordinate values for the estimated key points.

Next, the present disclosure can generate a visibility map 450 for each person joint location existing in the image data based on feature information of the image data 410 when extracting the probability value of the visibility map, and can extract a probability value 460 corresponding to the person joint location existing in the visibility map 450.

Here, the present disclosure, when generating a visibility map 450, if the coordinate values of a key point 440 for a specific joint among person joints are extracted, can generate a visibility map 450 corresponding to the same joint as the specific joint from which the coordinate values of the key point were extracted.

In other words, the present disclosure can generate a number of visibility maps 450 equal to the number of joints from which key point coordinate values are extracted.

Here, the present disclosure can increase or decrease the number of visibility maps 450 in proportion to the number of joints from which key point coordinate values are extracted.

Next, the processor 180 can check whether there is a probability value of a joint matching the coordinate value of the key point from the probability value of the visibility map when the coordinate value of the key point and the probability value of the visibility map are extracted, and if there is a probability value of the matching joint, can check whether the probability value of the matching joint is equal to or less than a preset threshold value.

Here, the present disclosure can obtain a threshold value to be readjusted from the user input when a user input requesting readjustment of a threshold value is received, and readjust the currently set threshold value to the threshold value to be readjusted.

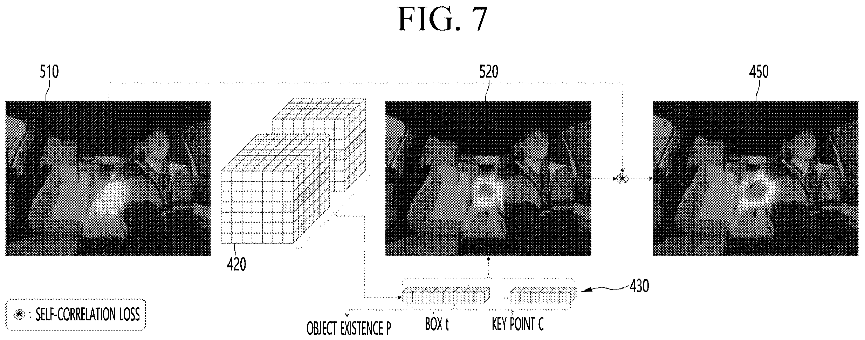

FIG. 7 is a view for explaining the learning process of a hybrid pose estimation model of an apparatus for estimating person pose according to an embodiment of the present disclosure.

As illustrated in FIG. 7, the present disclosure can pre-learn to extract coordinate values of key points corresponding to person joint locations in image data, generate a key point distribution map 520 based on the coordinate values of the extracted key points, generate an uncorrelated visibility map 510 corresponding to person joint locations in the image data, and compare the correlation between the joint probabilities of the uncorrelated visibility map 510 and the joint probabilities of the key point distribution map 520 so that the joint probabilities of the uncorrelated visibility map 510 can be aligned with the joint probabilities of the key point distribution map 520.

Here, the present disclosure can generate a plurality of key point distribution maps 520 and a plurality of uncorrelated visibility maps 510 for each person joint existing in image data, respectively, extract the key point distribution maps 520 and uncorrelated visibility maps 510 corresponding to the same joint to perform learning to align the maps, and when learning to align the key point distribution maps 520 and uncorrelated visibility maps 510 for all joints of the person existing in the image data is completed, terminate pre-learning.

For example, the present disclosure can perform learning by generating a key point distribution map based on the following mathematical expression when generating a key point distribution map.

$$d_{u,v,a} = \Psi(c_{i,j,a}) = \rho e^{-((u-c_{xk})^2 + (v-c_{yk})^2)/2\sigma^2}$$

Here, $d_{u,v,a}$ is the key point distribution map, $\Psi$ is the transformation function, $c_{i,j,a}$ is the key point coordinates, $\sigma$ is the standard deviation, and $\rho$ is the object presence probability.

In addition, the present disclosure can perform learning by generating a set of key point distribution maps based on the following mathematical expression.

$$D^s = \max\left[d_{0,0,a}, d_{0,1,a}, \ldots, d_{i,j,a}\right]_{a=1}^{Na}$$

Here, max operates pixel-wise to filter out low activations of key points in the same class.

In addition, the present disclosure can perform learning by applying self-correlation loss to a visibility map and a key point distribution map based on the following mathematical expression.

$$L_{corr} = 1 - \left(\frac{\sum(D^s - \bar{D^s})*(V^s - \bar{V^s})}{\sqrt{\sum(D^s - \bar{D^s})^2}*\sqrt{\sum(V^s - \bar{V^s})^2} + \varepsilon}\right)^2$$

$$\left(\bar{\cdot}\right)$$

Here, $\left(\bar{\cdot}\right)$ is the output mean.

In addition, the present disclosure can extract feature information of image data from a grid block 420 including a plurality of grid cells 430.

At this time, each grid cell 430 may include object existence information p, box information t, and key point information c.

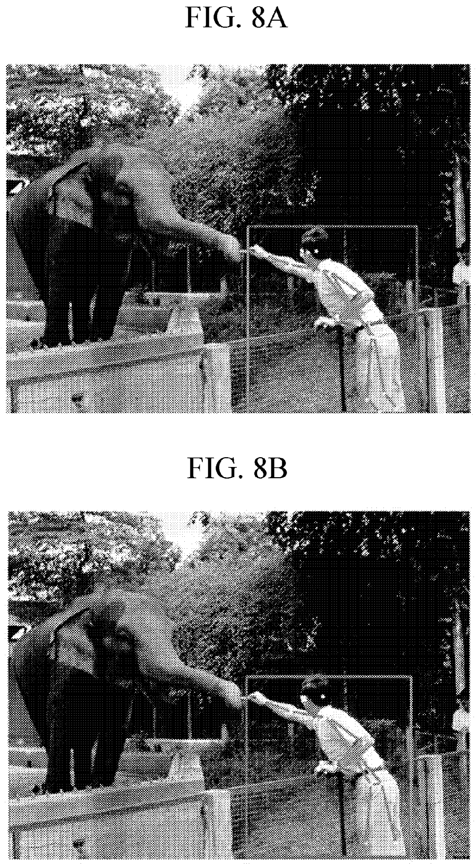

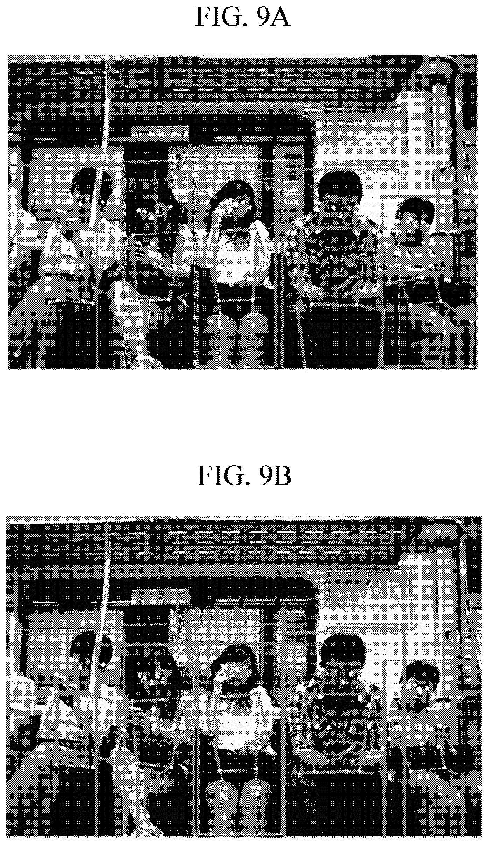

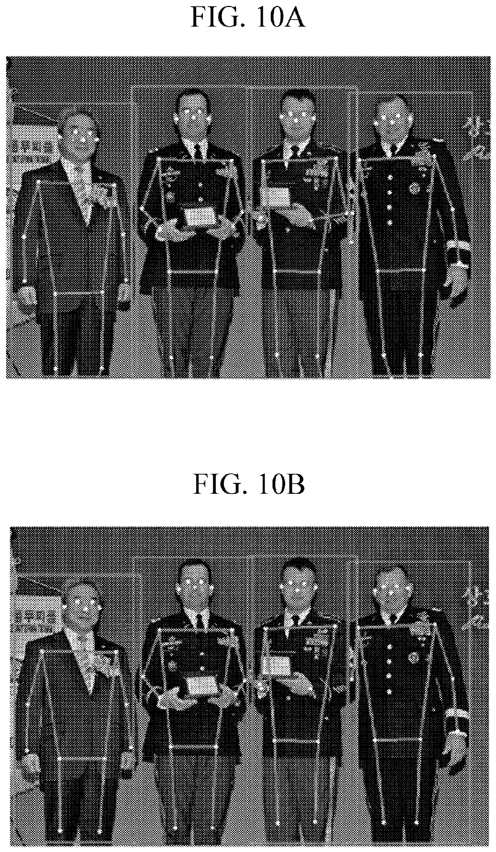

FIGS. 8a, 8b, 9a, 9b, 10a, and 10b are views illustrating key point filtering results of an apparatus for estimating person pose according to an embodiment of the present disclosure.

FIGS. 8a, 9a, and 10a are person pose estimation results according to the existing method, and FIGS. 8b, 9b, and 10b are person pose estimation results according to the method of the present disclosure.

FIG. 8a, FIG. 9a, and FIG. 10a illustrate a problem in that, in the results of person pose estimation according to the existing method, key points of joints that are not visible in the image exist, resulting in errors in pose estimation or unexpected results.

In contrast, FIGS. 8b, 9b, and 10b illustrate that, in the person pose estimation results according to the present disclosure, key points of joints that are not visible in the image are removed through filtering, thereby providing pose estimation information that is fast and highly accurate.

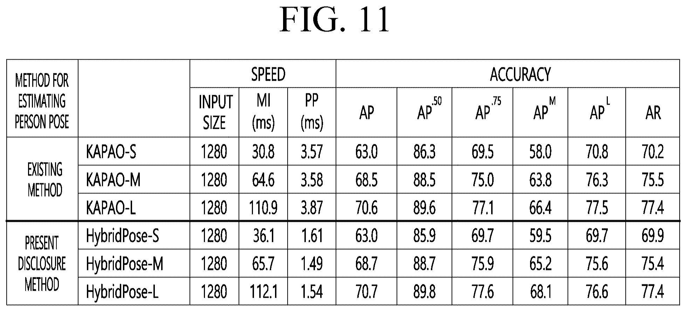

FIG. 11 is a table for explaining the performance of an apparatus for estimating person pose according to one embodiment of the present disclosure.

As illustrated in FIG. 11, the present disclosure can be seen to improve the speed of model inference MI and post-processing PP corresponding to the input data size compared to the existing method, and to improve the accuracy corresponding to the standard average precision AP and recall AR compared to the existing method.

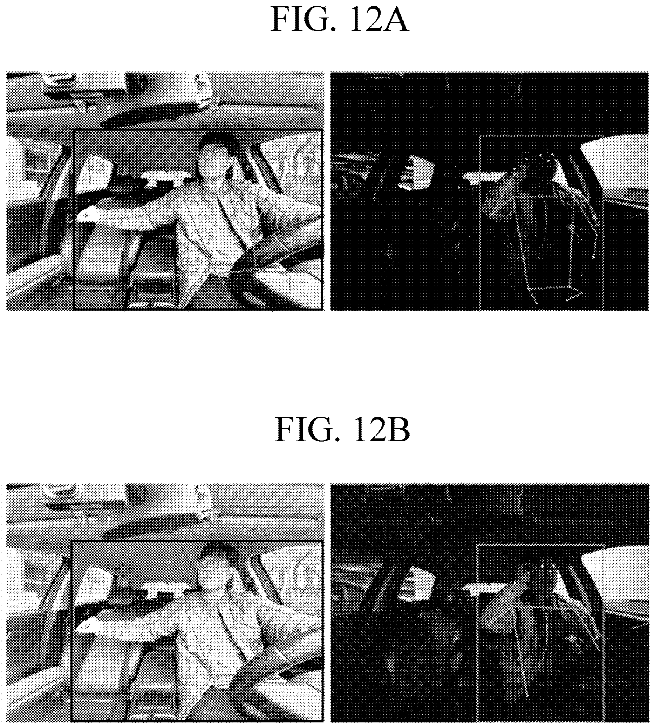

FIG. 12a and FIG. 12b are views applied to a driver monitoring system of an apparatus for estimating person pose according to one embodiment of the present disclosure.

As illustrated in FIG. 12a, if the hybrid pose estimation model of the present disclosure is not applied, key points of person joints that are not visible in the image appear, and thus, unexpected vehicle accidents may occur due to unnecessary key points of joints.

In contrast, as illustrated in FIG. 12b, when the hybrid pose estimation model of the present disclosure is applied, key points of person joints that are not visible in the image are filtered out and removed, so that only key points of joints that are actually visible in the image are accurately extracted, thereby providing safe information to the driver.

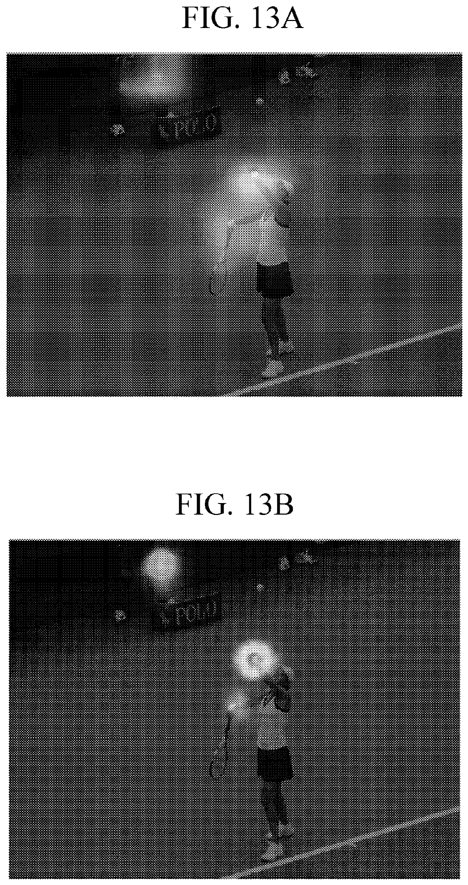

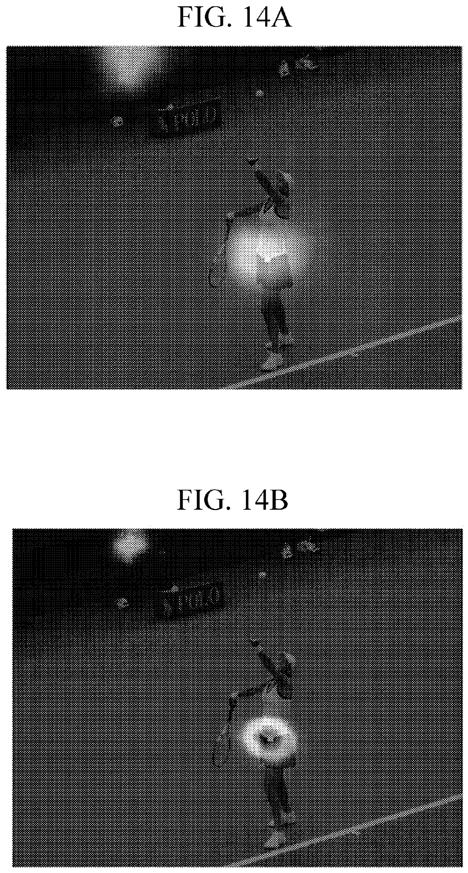

FIGS. 13a, 13b, 14a, and 14b are views illustrating alignment learning results between key points of an apparatus for estimating person pose and a probability distribution of a visual map according to an embodiment of the present disclosure.

As illustrated in FIG. 13a, when the hybrid pose estimation model of the present disclosure is not applied, it can be seen that it is difficult to identify the wrist joint because the probability distribution corresponding to the wrist joint of a person in the image does not accurately appear on the visual map.

In contrast, as illustrated in FIG. 13b, when the hybrid pose estimation model of the present disclosure is applied, the wrist joint can be accurately identified because the probability distribution corresponding to the wrist joint of a person in the image is accurately displayed on the visual map.

In addition, as illustrated in FIG. 14a, when the hybrid pose estimation model of the present disclosure is not applied, it can be seen that it is difficult to identify the hip joint because the probability distribution corresponding to the hip joint of a person in the image does not accurately appear on the visual map.

In contrast, as illustrated in FIG. 14b, when the hybrid pose estimation model of the present disclosure is applied, the wrist joint can be accurately identified because the probability distribution corresponding to the hip joint of the person in the image is accurately displayed on the visual map.

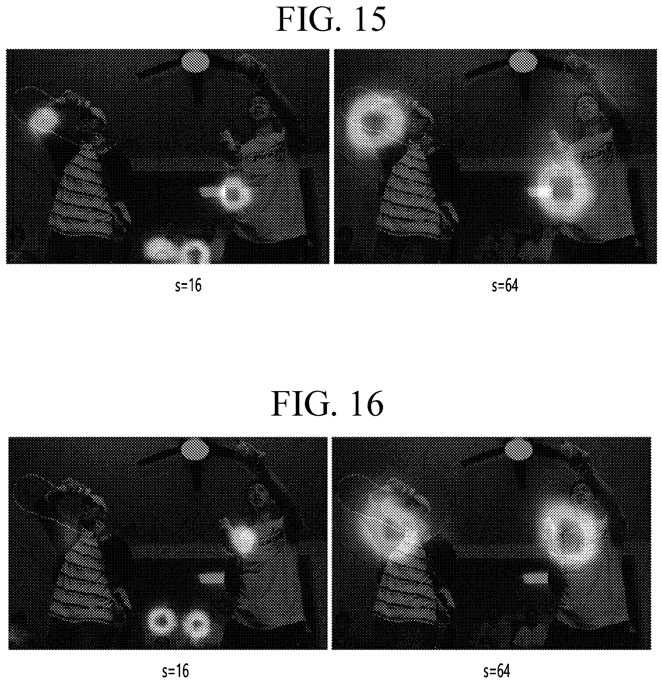

FIGS. 15 and 16 are views illustrating visual maps corresponding to the image scale of an apparatus for estimating person pose according to an embodiment of the present disclosure.

As illustrated in FIG. 15, when the hybrid pose estimation model of the present disclosure is applied, the elbow joint can be accurately identified because the probability distribution for the right elbow joint is accurately represented within the image even when the scale of the image is low.

In addition, as illustrated in FIG. 16, when the hybrid pose estimation model of the present disclosure is applied, the shoulder joint can be accurately identified because the probability distribution for the right shoulder joint is accurately represented within the image even when the scale of the image is low.

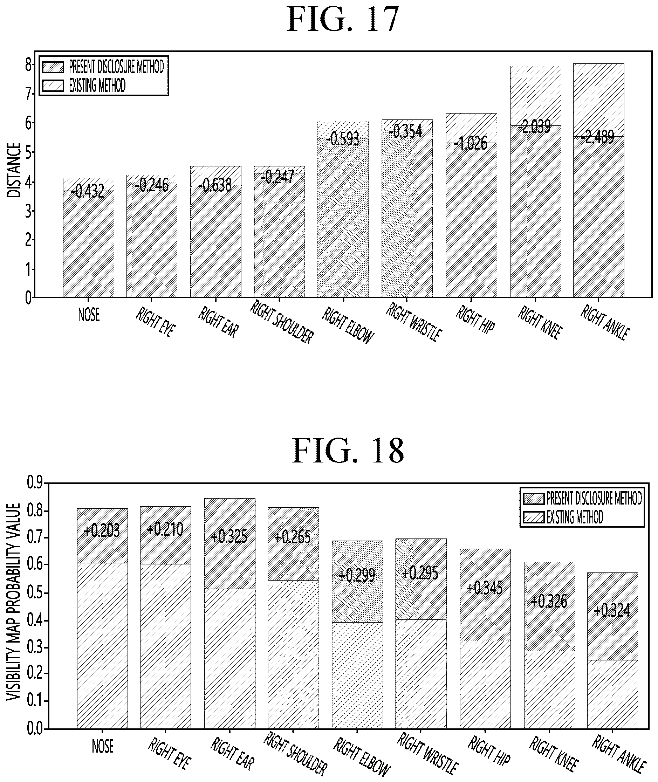

FIGS. 17 and 18 are views illustrating joint-specific pose estimation performance of an apparatus for estimating person pose according to an embodiment of the present disclosure.

As illustrated in FIG. 17, when the hybrid pose estimation model of the present disclosure is applied, it can be seen that the distance error between key points and the probability distribution of the visual map for each person joint in the image is reduced compared to the existing method.

In other words, it can be seen that the method of the present disclosure improves accuracy by minimizing the distance error between the probability distribution of the key point and the visual map for each joint compared to the existing method.

In addition, as illustrated in FIG. 18, when the hybrid pose estimation model of the present disclosure is applied, it can be seen that the probability value of the visual map for each person joint in the image is improved compared to the existing method.

In other words, it can be seen that the accuracy is improved because the probability value of the visual map for each joint increases in the method of the present disclosure compared to the existing method.

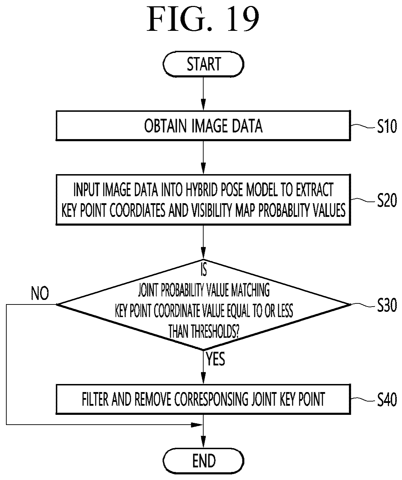

FIG. 19 is a view for explaining a method for estimating pose of the apparatus for estimating person pose according to an embodiment of the present disclosure.

As illustrated in FIG. 19, the present disclosure can obtain image data (S10).

In addition, the present disclosure can input the obtained image data into a pre-learned hybrid pose estimation model to extract the coordinate values of key points corresponding to person joint locations in the image data and the probability values of a visibility map, respectively (S20).

Here, the present disclosure can collectively estimate key points corresponding to person joint locations existing in image data based on feature information of the image data, and extract coordinate values for the estimated key points.

In addition, the present disclosure can generate a visibility map for each person joint location existing in the image data based on feature information of the image data, and extract a probability value corresponding to the person joint location existing in the visibility map.

Next, the present disclosure can check whether the probability value of the joint matching the coordinate value of the key point is equal to or less than a threshold value (S30).

Here, the present disclosure can check whether there is a probability value of a joint matching the coordinate value of the key point from the probability value of the visibility map when the coordinate value of the key point and the probability value of the visibility map are extracted, and if there is a probability value of the matching joint, can check whether the probability value of the matching joint is equal to or less than a preset threshold value.

In addition, the present disclosure can obtain shooting environment information of image data, and readjust a threshold value when the shooting environment information of the image data is included in a threshold value change condition.

In some cases, the present disclosure, when a user input for selecting a specific purpose utilization mode is received, can check whether a threshold value corresponding to the specific purpose utilization mode is pre-stored in memory, and if a threshold value corresponding to the specific purpose utilization mode is pre-stored in memory, readjust the currently set threshold value to a threshold value corresponding to the specific purpose utilization mode.

In another case, the present disclosure can obtain a threshold value to be readjusted from the user input when a user input requesting readjustment of a threshold value is received, and readjust the currently set threshold value to the threshold value to be readjusted.

Next, the present disclosure can filter and remove key points of a corresponding joint if the probability value of the joint matching the coordinate value of the key point is equal to or less than a threshold value (S40).

The above-described present disclosure can be implemented as computer-readable code on a program-recorded medium. The computer-readable medium includes all types of recording devices that store data that can be read by a computer system. Examples of computer-readable media include hard disk drives (HDDs), solid-state disks (SSDs), silicon disk drives (SDDs), read-only memory (ROM), random access memory (RAM), CD-ROMs, magnetic tapes, floppy disks, and optical data storage devices. In addition, the computer may include a processor 180 of an artificial intelligence device.

[Industrial Applicability]

According to the person pose estimation device according to the present disclosure, the accuracy and speed of person pose estimation can be improved by filtering key points of joints with low reliability by comparing the coordinate values of key points with the probability values of a visibility map, and therefore, the industrial applicability is remarkable.

**Claims**

1. An apparatus for estimating person pose comprising:

    a memory storing a hybrid pose estimation model; and
    a processor estimating a person pose within an image based on the hybrid pose estimation model,
    wherein the processor, obtains image data; inputs the obtained image data into the pre-trained hybrid pose estimation model to extract coordinate values of key points corresponding to person join locations within the image data and probability values of a visibility map, respectively; checks whether the probability value of a joint matching the coordinate value of the key point is equal to or less than a threshold value; and if the probability value of the joint matching the coordinate value of the key point is equal to or less than the threshold value, filters out and removes the key point of the corresponding joint.

2. The apparatus for estimating person pose of claim 1,
    wherein the processor extracts feature information of the image data through the hybrid estimation model, and, based on the feature information of the image data, simultaneously extracts coordinate values of key points corresponding to person joint locations within the image data and probability distribution values of a visibility map corresponding to person joint locations within the image data.

3. The apparatus for estimating person pose of claim 2,
wherein the hybrid pose estimation model includes:

at least one first neural network model that extracts feature information from the image data;
a second neural network model that extracts coordinate values of key points corresponding to person joint locations within the image data based on the feature information from the image data; and
a third neural network model that extracts probability distribution values of a visibility map corresponding to person joint locations within the image data based on the feature information from the image data.

4. The apparatus for estimating person pose of claim 1,
wherein the hybrid pose estimation model is pre-trained to extract coordinate values of key points corresponding to person joint locations in the image data, generate a key point distribution map based on the coordinate values of the extracted key points, generate an uncorrelated visibility map corresponding to person joint locations in the image data, and compare a correlation between the joint probability of the uncorrelated visualization and the joint probability of the key point distribution map so that the joint probability of the uncorrelated visibility map is aligned with the joint probability of the key point distribution map.

5. The apparatus for estimating person pose of claim 4,
wherein the hybrid pose estimation model, generates a plurality of key point distribution maps and a plurality of uncorrelated visibility maps for each person joint existing in the image data; extracts the key point distribution maps and the uncorrelated visibility maps corresponding to the same joint to perform learning to align the maps, and terminates learning when learning to align the key point distribution maps and the uncorrelated visibility maps for all joints of the person existing in the image data is completed.

6. The apparatus for estimating person pose of claim 1,
wherein the processor, when extracting the key point coordinate values, estimates key points corresponding to person joint locations within the image data based on the feature information of the image data, and extracts coordinate values for the estimated key points.

7. The apparatus for estimating person pose of claim 6,
wherein the processor, when receiving a user input selecting a specific purpose utilization mode, obtains essential joint information required for the specific purpose utilization mode, and selectively extracts key points corresponding to essential joint positions from among all joint positions existing in the image data based on the essential joint information.

8. The apparatus for estimating person pose of claim 6,
wherein the processor, when a user input for selecting a specific part of a person other than the person joint is received, collectively estimates key points corresponding to the person joint locations within the image data and key points corresponding to the specific part locations.

9. The apparatus for estimating person pose of claim 1,
wherein the processor, when extracting the probability value of the visibility map, creates a visibility map for each person joint location within the image data based on the feature information of the image data, and extracts a probability value corresponding to the person joint location within the visibility map.

10. The apparatus for estimating person pose of claim 9,
wherein the processor, when generating the visibility map, generates a visibility map corresponding to the same joint as the specific joint from which the coordinate value of the key point is extracted when the coordinate values of key points for a specific joint among the human joints are extracted.

11. The apparatus for estimating person pose of claim 9,
wherein the processor, when generating the visibility map, generates the visibility map using the pre-trained hybrid pose estimation model to align the key point distribution map corresponding to the same joint with the uncorrelated visibility map.

12. The apparatus for estimating person pose of claim 1,
wherein the processor, when the coordinate values of the key point and the probability values of the visibility map are extracted, checks whether a probability value of a joint matching the coordinate values of the key point exists from the probability values of the visibility map, and if the probability value of the matching joint exists, checks whether the probability value of the matching joint is equal to or less than a preset threshold value.

13. The apparatus for estimating person pose of claim 12,
   wherein the processor obtains the shooting environment information of the image data, and readjusts the threshold value if the shooting environment information of the image data is included in the threshold value change condition.

14. The apparatus for estimating person pose of claim 12,
   wherein the processor, when a user input requesting threshold value readjustment is received, obtains a threshold value to be readjusted from the user input, and readjusts the currently set threshold value to the threshold value to be readjusted.

15. A method for estimating person pose comprising:

   obtaining image data;
   inputting the obtained image data into the pre-trained hybrid pose estimation model to extract the coordinate values of key points corresponding to person joint locations within the image data and the probability values of a visibility map;
   checking whether the probability value of a joint matching the coordinate value of the key point is equal to or less than a threshold value; and
   filtering and removing the key point of the corresponding joint if the probability value of the joint matching the coordinate value of the key point is equal to or less than the threshold value.

# FIG. 1

<u>100</u>

180

110 — COMMUNICATION PART

PROCESSOR

MEMORY — 170

120 — INPUT PART

OUTPUT PART — 150

130 — LEARNING PROCESSOR

SENSING PART — 140

# FIG. 2

100

210

260

AI APPARATUS

COMMUNICATION PART

PROCESSOR

LEARNING PROCESSOR — 240

200

MEMORY — 230

MODEL STORAGE PART — 231

231a

# FIG. 3

1

# FIG. 4

# FIG. 5

# FIG. 6

EP 4 672 151 A1

# FIG. 7

510

520

450

420

430

OBJECT EXISTENCE P    BOX t    KEY POINT C

⊛ : SELF-CORRELATION LOSS

## FIG. 8A

## FIG. 8B

# FIG. 9A

# FIG. 9B

# FIG. 10A

# FIG. 10B

# FIG. 11

| METHOD FOR ESTIMATING PERSON POSE | | SPEED | | | ACCURACY | | | | | |
|---|---|---|---|---|---|---|---|---|---|---|
| | | INPUT SIZE | MI (ms) | PP (ms) | AP | $AP^{.50}$ | $AP^{.75}$ | $AP^{M}$ | $AP^{L}$ | AR |
| EXISTING METHOD | KAPAO-S | 1280 | 30.8 | 3.57 | 63.0 | 86.3 | 69.5 | 58.0 | 70.8 | 70.2 |
| | KAPAO-M | 1280 | 64.6 | 3.58 | 68.5 | 88.5 | 75.0 | 63.8 | 76.3 | 75.5 |
| | KAPAO-L | 1280 | 110.9 | 3.87 | 70.6 | 89.6 | 77.1 | 66.4 | 77.5 | 77.4 |
| PRESENT DISCLOSURE METHOD | HybridPose-S | 1280 | 36.1 | 1.61 | 63.0 | 85.9 | 69.7 | 59.5 | 69.7 | 69.9 |
| | HybridPose-M | 1280 | 65.7 | 1.49 | 68.7 | 88.7 | 75.9 | 65.2 | 75.6 | 75.4 |
| | HybridPose-L | 1280 | 112.1 | 1.54 | 70.7 | 89.8 | 77.6 | 68.1 | 76.6 | 77.4 |

# FIG. 12A

# FIG. 12B

## FIG. 13A

## FIG. 13B

## FIG. 14A

## FIG. 14B

# FIG. 15

s=16

s=64

# FIG. 16

s=16

s=64

# FIG. 17

# FIG. 18

# FIG. 19

```
        ┌─────────┐
        │  START  │
        └─────────┘
             │
             ▼
┌──────────────────────────────────────┐
│          OBTAIN IMAGE DATA           │────  S10
└──────────────────────────────────────┘
             │
             ▼
┌──────────────────────────────────────┐
│ INPUT IMAGE DATA INTO HYBRID POSE    │
│ MODEL TO EXTRACT KEY POINT COORDIATES │────  S20
│ AND VISIBILITY MAP PROBABLITY VALUES │
└──────────────────────────────────────┘
             │
             ▼
         ◇ IS
      JOINT PROBABILITY VALUE MATCHING
  NO  KEY POINT COORDINATE VALUE EQUAL TO OR LESS  ────  S30
      ◇      THAN THRESHOLDS? ◇
             │ YES
             ▼
┌──────────────────────────────────────┐
│ FILTER AND REMOVE CORRESPONSING      │────  S40
│ JOINT KEY POINT                      │
└──────────────────────────────────────┘
             │
             ▼
        ┌─────────┐
        │   END   │
        └─────────┘
```

## INTERNATIONAL SEARCH REPORT

| International application No. |
| --- |
| **PCT/KR2024/004889** |

**A. CLASSIFICATION OF SUBJECT MATTER**

**G06T 7/73**(2017.01)i; **G06T 5/70**(2024.01)i; **G06T 5/40**(2006.01)i; **G06V 10/44**(2022.01)i; **G06V 40/10**(2022.01)i

According to International Patent Classification (IPC) or to both national classification and IPC

**B. FIELDS SEARCHED**

Minimum documentation searched (classification system followed by classification symbols)

G06T 7/73(2017.01); G06F 18/00(2023.01); G06K 9/00(2006.01); G06N 3/08(2006.01); G06V 10/98(2022.01); G06V 40/10(2022.01); H04N 19/54(2014.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 자세(pose), 추정(estimation), 모델(model), 사람(human), 관절(joint), 키포인트(key point), 시각화 지도(visibility map), 좌표(coordination), 확률(probability), 임계값(threshold)

**C. DOCUMENTS CONSIDERED TO BE RELEVANT**

| Category* | Citation of document, with indication, where appropriate, of the relevant passages | Relevant to claim No. |
| --- | --- | --- |
| X | KR 10-2022-0110453 A (NAVER CORPORATION et al.) 08 August 2022 (2022-08-08) See paragraphs [0014], [0046]-[0049], [0171] and [0178]; claims 3 and 5; and figures 2 and 9. | 1-3,6,9-10,12,15 |
| Y | | 7-8 |
| A | | 4-5,11,13-14 |
| Y | KR 10-2023-0036458 A (CHUNGBUK NATIONAL UNIVERSITY INDUSTRY-ACADEMIC COOPERATION FOUNDATION) 14 March 2023 (2023-03-14) See claim 1. | 7-8 |
| A | KR 10-2022-0023553 A (ELECTRONICS AND TELECOMMUNICATIONS RESEARCH INSTITUTE) 02 March 2022 (2022-03-02) See paragraph [0006]; and claim 1. | 1-15 |

☑ Further documents are listed in the continuation of Box C.   ☑ See patent family annex.

| | |
| --- | --- |
| * Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **16 July 2024** | **16 July 2024** |

| Name and mailing address of the ISA/KR | Authorized officer |
| --- | --- |
| **Korean Intellectual Property Office**<br>**Government Complex-Daejeon Building 4, 189 Cheongsa-**<br>**ro, Seo-gu, Daejeon 35208** | |
| Facsimile No. **+82-42-481-8578** | Telephone No. |

Form PCT/ISA/210 (second sheet) (July 2022)

## INTERNATIONAL SEARCH REPORT

| International application No. |
| --- |
| **PCT/KR2024/004889** |

**C.     DOCUMENTS CONSIDERED TO BE RELEVANT**

| Category* | Citation of document, with indication, where appropriate, of the relevant passages | Relevant to claim No. |
| --- | --- | --- |
| A | KR 10-2021-0095941 A (EVERSEEN LIMITED) 03 August 2021 (2021-08-03)<br>See paragraphs [0006]-[0008]; and claims 1-8. | 1-15 |
| A | US 2022-0191542 A1 (GOOGLE LLC) 16 June 2022 (2022-06-16)<br>See paragraphs [0002]-[0007]; and figures 1-14. | 1-15 |

Form PCT/ISA/210 (second sheet) (July 2022)

## INTERNATIONAL SEARCH REPORT
### Information on patent family members

International application No.

**PCT/KR2024/004889**

| Patent document cited in search report | | | Publication date (day/month/year) | Patent family member(s) | | | Publication date (day/month/year) |
|---|---|---|---|---|---|---|---|
| KR | 10-2022-0110453 | A | 08 August 2022 | JP | 2021-111380 | A | 02 August 2021 |
| | | | | JP | 7178396 | B2 | 25 November 2022 |
| | | | | KR | 10-2021-0087680 | A | 13 July 2021 |
| | | | | US | 11610331 | B2 | 21 March 2023 |
| | | | | US | 2021-0209788 | A1 | 08 July 2021 |
| KR | 10-2023-0036458 | A | 14 March 2023 | | None | | |
| KR | 10-2022-0023553 | A | 02 March 2022 | | None | | |
| KR | 10-2021-0095941 | A | 03 August 2021 | AU | 2019-394188 | A1 | 11 June 2020 |
| | | | | AU | 2019-394188 | B2 | 02 June 2022 |
| | | | | BR | 112021008816 | A2 | 10 August 2021 |
| | | | | CA | 3121119 | A1 | 11 June 2020 |
| | | | | CA | 3121119 | C | 29 August 2023 |
| | | | | CL | 2021001455 | A1 | 26 November 2021 |
| | | | | CN | 113168521 | A | 23 July 2021 |
| | | | | CO | 2021008155 | A2 | 30 June 2021 |
| | | | | EP | 3891651 | A1 | 13 October 2021 |
| | | | | JP | 2022-510417 | A | 26 January 2022 |
| | | | | JP | 7241876 | B2 | 17 March 2023 |
| | | | | MX | 2021006521 | A | 07 July 2021 |
| | | | | US | 10937185 | B2 | 02 March 2021 |
| | | | | US | 2020-0175713 | A1 | 04 June 2020 |
| | | | | WO | 2020-115579 | A1 | 11 June 2020 |
| US | 2022-0191542 | A1 | 16 June 2022 | US | 11770551 | B2 | 26 September 2023 |

Form PCT/ISA/210 (patent family annex) (July 2022)